# EUROPÄISCHE PATENTSCHRIFT

(11) **EP 3 850 245 B1**
(45) Veröffentlichungstag und Bekanntmachung des Hinweises auf die Patenterteilung: **18.01.2023**
(21) Anmeldenummer: 19769396.3
(22) Anmeldetag: 05.09.2019
(51) Int. Cl.: F16H 57/02, B60T 1/087, F16H 57/04, F16D 57/04

(54) **AUTOMATGETRIEBE MIT RETARDER**
AUTOMATIC TRANSMISSION WITH RETARDER
TRANSMISSION AUTOMATIQUE COMPRENANT UN RALENTISSEUR

(30) Priorität: 13.09.2018 DE 102018122335
(43) Veröffentlichungstag der Anmeldung: 21.07.2021
(73) Patentinhaber: Voith Patent GmbH, 89522 Heidenheim (DE)
(72) Erfinder: FÄHNLE, Rainer, 73540 Heubach (DE)
(74) Vertreter: Voith Patent GmbH - Patentabteilung
(86) Internationale Anmeldenummer: PCT/EP2019/073656
(87) Internationale Veröffentlichungsnummer: WO 2020/053055

(56) Entgegenhaltungen:
- EP-A2- 0 716 966
- WO-A1-2004/088175
- DE-A1-102006 023 525
- DE-A1-102016 218 114
- DE-A1-102017 100 671

## Beschreibung

Die Erfindung betrifft ein Automatgetriebe mit Retarder zum Einsatz in einem Kraftfahrzeugantriebsstrang.

Es ist bekannt, dass Getriebeeinheiten, insbesondere Automatgetriebe, einen Retarder umfassen. So ist aus der DE 10 2016 218 114 A1 ein entsprechendes Automatgetriebe mit Retarder bekannt, bei dem der Retarder auf der Getriebeausgangsseite positioniert ist. Aus Figur 10 ist zu entnehmen, wie der Retarder in dem Koppelschema positioniert ist. Der Rotor des Retarders ist direkt mit der Ausgangswelle des Getriebes gekoppelt, so dass der Rotor immer die Ausgangsdrehzahl des Getriebes dreht, die an die Antriebsachse weitergeleitet wird. Ein derartiger Retarder wird Sekundärretarder genannt.

Aus der EP 1 608 895 A1 ist weiterhin ein Getriebe mit einem Wärmetauscher bekannt, der der Ausgangsseite des Getriebes zugeordnet ist und der wenigstens mittelbar über Verbindungsleitungen mit dem Getriebe verbunden ist. Wobei im Gehäuse des Getriebes integrierte betriebsmittelführende Kanäle vorgesehen sind, die sich wenigstens über einen Teil der axialen Erstreckung des Gehäuses bis zur ausgangsseitigen Stirnseite des Getriebes erstrecken.

Weitere mögliche Lösungen sind aus der DE 10 2006 023 525 A1 und der EP 0 716 966 A2 zu entnehmen.

Weiterhin wird eine Halterung mit integrierten Kanälen offenbart, die zur Befestigung des Wärmetauschers vorgesehen ist, wobei die Kanäle zur Verbindung der betriebsmittelführenden Kanäle im Getriebe mit denen im Wärmetauscher vorgesehen sind. Die Anschlüsse und die Befestigungen sind hinsichtlich der Art und Dimensionierung standardisiert und komplementär ausgeführt.

Bekannt ist auch die Trennung der Funktionen von Wandler und Retarder. Beide Funktionen könne so einfach optimiert werden. Weiterhin sind auch Getriebeeinheiten mit mehr als einem Wärmetauscher bekannt. In diesem Fall sind die Wärmetauscher unterschiedlichen Kühlkreisläufen zugeordnet. So können ein Kühlkreislauf für einen hydrodynamischen Kreislauf und der anderer für die Kühlung der Steuerung vorgesehen sein.

Derartige Getriebe verfügen in der Regel über einen gemeinsamen Ölkreislauf mit einem Ölsumpf, aus dem das Öl für die Wandlerfunktion, die Retarderfunktion und die Getriebeschmierung entnommen wird. Weiterhin sind unterschiedliche Anordnungen bekannt, wie der Wandler, der Retarder oder auch eine Wandler-Retarderkombination im Getriebe angeordnet sind.

Des Weiteren sind Lösungen mit separatem Retarder bekannt die mit dem Getriebe koppelbar sind. Derartige Retarder können als separate Einheit außerhalb des Getriebes angeordnet werden, wobei die Inline- oder Offline-Koppelung mit dem Getriebe, zum Antrieb des Rotors, bekannt ist. Weiterhin bekannt ist die primärseitige und sekundärseitige Kopplung mit dem Getriebe.

Eine der Aufgaben der Erfindung ist es, einen verbesserten Aufbau für ein Automatgetriebe vorzuschlagen, in dem ein Wandler und ein Retarder integriert sind.

Die Aufgabe wird erfindungsgemäß durch eine Ausführung entsprechend Anspruch 1 gelöst. Weitere vorteilhafte Merkmale der erfindungsgemäßen Ausführung finden sich in den Unteransprüchen.

Es wird ein Automatgetriebe mit einem Retarder zum Einsatz in einem Kraftfahrzeugantriebsstrang vorgeschlagen, das ein Getriebegehäuse mit einem Motorflanschanschlussdeckel und einem Getriebeausgangsdeckel, und eine Wärmetauscherkonsole, die an der Getriebeausgangsseite (A) angeordnet ist, umfasst, wobei Verbindungsleitungen vorgesehen sind, mittels denen ein Wärmetauscher, der an der Wärmetauscherkonsole angeordnet ist, mit dem Automatgetriebe verbunden ist.

Erfindungsgemäß wird vorgeschlagen, dass der Retarder ein Rotorgehäuse und ein Statorgehäuse umfasst, die den Getriebeausgangsdeckel bilden. Das Gehäuse des Retarders bildet somit auf der Getriebeausgangsseite den Verschluss des Getriebes. Durch diese Anordnung des Retarders wird beim Retarderbetrieb weniger Wärme ins Getriebe eingebracht. Insbesondere kann der Deckel für die Kühlung optimiert ausgeführt werden, z.B. durch Anbringen von Kühlrippen. Ein weiterer Vorteil ist der relativ geringe Abstand zum Wärmetauscher auf der Getriebeausgangsseite.

Erfindungsgemäß sind die Verbindungsleitungen im Statorgehäuse integriert angeordnet. Das Statorgehäuse kann beispielsweise als Gussteil ausgeführt sein, wobei die Verbindungsleitungen als Kanäle in das Gussteil eingegossen sind. Denkbar ist auch, dass die Verbindungsleitungen abschnittsweise durch Rohre oder Schläuche geführt werden, die im Statorgehäuse integriert sind bzw. innerhalb der Rotorgehäuseteils verlaufen.

Weiterhin kann das Statorgehäuse eine erste und zweite Verbindungebene aufweisen, wobei die Ausgänge der Verbindungsleitungen in den Verbindungebenen enden. Die Verbindungsebenen bilden Kontaktflächen an denen weiter Bauteile angeschlossen werden können.

Erfindungsgemäß kann die Wärmetauscherkonsole eine Konsole umfassen, die mit dem Statorgehäuse in der ersten Verbindungsebene gekoppelt ist. Dabei können weiter Teilabschnitte der Verbindungsleitungen in der Konsole integriert sein.

In der bevorzugten Ausführung kann die Konsole zweiteilig ausgeführt sein, wobei die Verbindungsleitungen, die Zuführleitung, in der ersten Konsole und die Verbindungsleitungen, die Rückführleitung, in der zweiten Konsole integriert sind. Vorzugsweise sind also Kanäle wenigstens teilweise, vorzugsweise vollständig in der Wand der Halterung angeordnet. Die Halterungen können beispielsweise als Gussteile ausgeführt sein.

Weiterhin kann im Getriebegehäuse ein Ventilblock vorgesehen sein, wobei der Ventilblock mit den Wärmetauscher über die Verbindungsleitungen verbunden ist.

Vorzugsweise kann der Ventilblock direkt mit dem Statorgehäuseteil in der zweiten Verbindungsebene gekoppelt sein, wobei die Verbindungsleitungen komplementär zu den Ventilblockanschlüssen angeordnet sind.

Weiterhin können im Statorgehäuse Kanäle vorgesehen sein, die mit dem Retarderarbeitsraum, der von Rotor und Stator gebildet wird, verbunden sind. Auch diese Kanäle können integriert in das Statorgehäuse ausgeführt sein. Auch diese Kanäle können in der zweiten Verbindungsebene über komplementäre Anschlüsse mit dem Ventilblock gekoppelt sein, so dass der Retarderarbeitsraum mit Öl befüllbar und entleerbar ist.

Im Statorgehäuse sind erfindungsgemäß alle für die Retarderfunktion notwendigen Kanäle bzw. Verbindungsleitungen integriert. Weiterhin sind Verbindungsleitungen im Statorgehäuse integriert, die für die Verbindung des Wärmetauschers mit dem Getriebe, insbesondere dem Ölsumpf des Getriebes, notwendig sind. Aus dem Ölsumpf wird auch der Wandler mit Öl für den Wandlerbetrieb versorgt. Im Wandlerbetrieb wie auch im Fahrbetrieb wird Öl aus dem Ölsumpf bereitgestellt und muss anschließend gekühlt werden. Die erforderliche Verbindung zum Wärmetauscher erfolgt erfindungsgemäß auch über Verbindungsleitungsabschnitte die im Statorgehäuse integriert sind.

In einer bevorzugten Ausführung kann die zweite Verbindungsebene einen Ventilblockkoppelbereich aufweisen, in dem die Verbindungsleitungen und die Kanäle mit dem Ventilblock verbindbar sind. Der Ventilblockkoppelbereich ist also ein Teilbereich in der zweiten Verbindungsebene, in dem alle Anschlussleitungen verhältnismäßig eng zueinander angeordnet sind, so dass der Ventilblock kompakt ausgeführt sein kann. Der Ventilblock umfasst Ventile zur Regelung der Retarderfunktion, der Wandlerfunktion und der Ölsumpfkühlfunktion im Fahrbetrieb.

Das erfindungsgemäße Statorgehäuse ermöglicht durch seine Anordnung und Integration in den Getriebeaufbau einen sehr kompakten und einfachen Aufbau des Getriebes. Weiterhin wird die Montage des Getriebes durch diesen Aufbau wesentlich vereinfacht. Die Anzahl der erforderlichen Bauteile reduziert sich erheblich und die Anzahl der Koppelstellen bzw. Verbindungsstellen zwischen zwei Leitungsabschnitten verringert sich, so dass eine verbesserte Leckagedichtigkeit erreicht wird.

Weiterhin kann in der bevorzugten Ausführung die Ausgangswelle im Retarder gelagert werden, wobei ein erstes Lager im Statorgehäuse und ein zweites Lager im Rotorgehäuse angeordnet sein können. Weiterhin kann der Rotor zwischen den Lagern angeordnet sein, wobei die Innenringe der Lager und der Rotor mittels einer Spannschraube gegeneinander verspannt sind.

Anhand von Ausführungsbeispielen werden weitere vorteilhafte Ausprägungen der Erfindung unter Bezugnahme auf die Zeichnungen erläutert. Die genannten Merkmale können nicht nur in der dargestellten Kombination vorteilhaft umgesetzt werden, sondern auch einzeln untereinander kombiniert werden. Die Figuren zeigen im Einzelnen:
- Fig.1: Koppelschema eines Automatgetriebes mit Retarder
- Fig.2: Ansicht auf die Ausgangsseite des Automatgetriebes mit der Wärmetauscherkonsole
- Fig.3: Schnittdarstellung durch das Retardergehäuse
- Fig.4: Statorgehäuse mit den Leitungsenden zum Anschluss der Wärmetauscherkonsole
- Fig.5: Statorgehäuse mit den Leitungsenden zum Anschluss des Ventilblocks

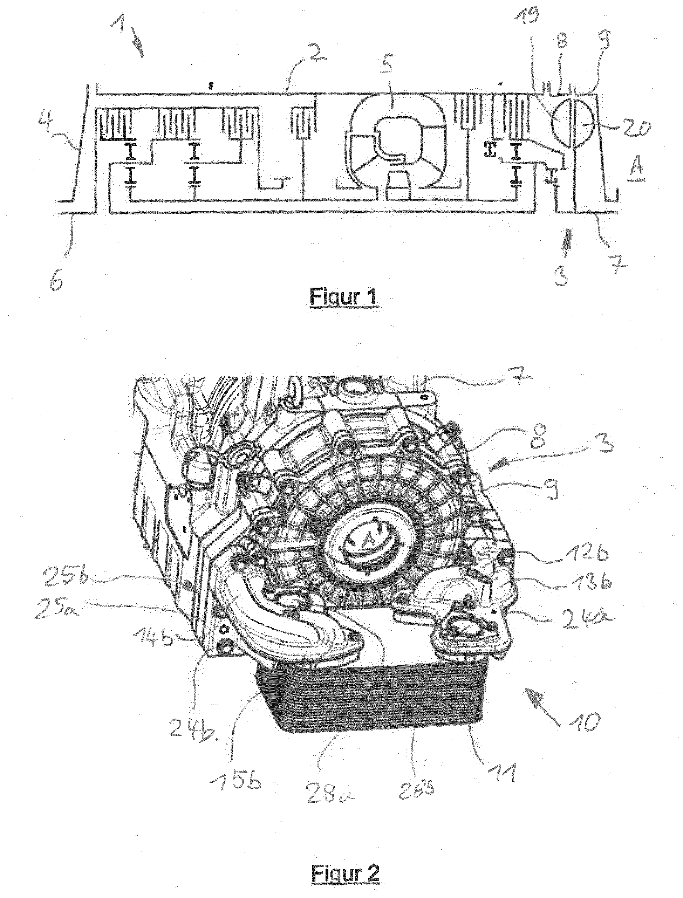

In Figur 1 ist das Koppelschema eines Automatgetriebes mit Retarder dargestellt. Das Getriebegehäuse setzt sich zusammen aus dem Motorflanschanschlussdeckel 4, dem eigentlichen Getriebegehäuse 2, in dem auch der Wandler 5 angeordnet ist, und dem Retardergehäuse, zusammengesetzt aus dem Statorgehäuse 7 und den Rotorgehäuse 9. Der Rotor 20 des Retarders 3 ist direkt mit der Ausgangswelle 7 drehfest gekoppelt.

In Figur 2 ist eine Ansicht auf die Ausgangsseite A des Automatgetriebes mit der Wärmetauscherkonsole 10 dargestellt. Aus dieser Ansicht ist der vorteilhafte Aufbau des Getriebes zu erkennen, insbesondere die wesentliche Anordnung des Statorgehäuses 8. Das Statorgehäuse 8 trennt den Getriebeteil und den Wandler des Automatgetriebes von Retarder. Der Retarder bzw. das Statorgehäuse 8 und das Rotorgehäuseteil 9 bildet in gewissermaßen den Getriebeausgangsdeckel durch den die Ausgangswelle 7 nach außen geführt wird. Die Außenkontur des Statorgehäuses 8 entspricht im Wesentlichen der Kontur des Getriebegehäuses 2. Die Wärmetauscherkonsole 10, die sich aus zwei Konsolenteilen 24 a, b und dem Wärmetauscher 11 zusammensetzt, ist direkt mit dem Statorgehäuses 8 gekoppelt bzw. an dieses angeschraubt.

Der Wärmetauscher 11 ist als 2-flutiger Wärmetauscher ausgeführt, wobei die beiden Kanäle durch den Wärmetauscher 11 jeweils über in die Konsolen integrierte Verbindungsleitungen 12b, 13b, 14 b, 15b angeschlossen sind.

Im ersten Konsolenteil 24 a sind die Zuführleitungen 12b und 13b integriert und im zweiten Konsolenteil 24b die Rückführleitungen 14b und 15b. Die Kühlwasseranschlüsse 28a, b sind mit dem hier nicht dargestellten Kühlwasserkreislauf des Kraftfahrzeugs verbunden.

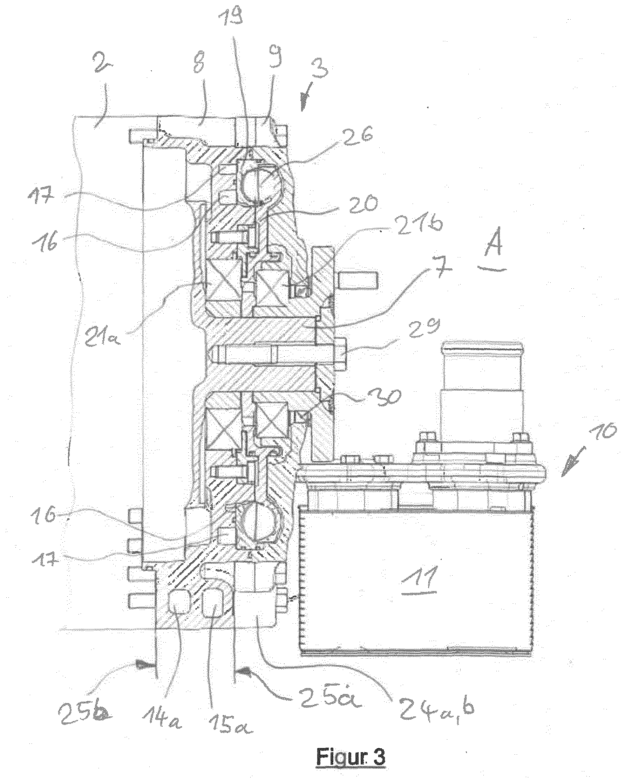

Figur 3 zeigt eine Schnittdarstellung durch das Retardergehäuse. Aus dieser Darstellung ist zu entnehmen, dass das Statorgehäuse 8 zwei wesentliche Verbindungsebenen 25 a und b aufweist. In der Verbindungsebene 25b ist das Getriebegehäuse 2 mit dem Statorgehäuse 8 und in der Verbindungsebene 25a sind die Konsolenteile 24a und b mit dem Statorgehäuse 8 gekoppelt. Die Verbindungen der Bauteile erfolgt vorzugsweise durch Verschraubung, wobei in den Verbindungsebenen 25a und b jeweils ein Dichtungselement zwischen den Bauteilen bzw. zwischen den Verbindungsleitungsabschnitten angeordnet ist.

Zu erkennen sind weiterhin einige Kanäle bzw. Verbindungsleitungen. So sind die beiden Rückführleitungen 14a und 15a zu sehen, die im Schnittbereich quer zur Längsachse des Getriebes verlaufen und in das Bauteil eingegossen sind. Weiterhin sind der Ölzuführkanal 16 und der Ölrückführkanal 17, die im Wesentlichen um den Retarderarbeitsraum 26 verlaufen, dargestellt. Über den Ölzuführkanal 16 wird der Arbeitsraum mit Arbeitsmedium, Öl, gefüllt und vom Ölrückführkanal 17 gelangt das Öl zum Wärmetauscher 11zurück, um wieder abgekühlt zu werden. Die allgemeine Funktion des Retarders ist aus dem StdT bekannt und braucht hier nicht näher erklärt zu werden.

Zu erkennen ist in dieser Ansicht auch die Lagerung der Ausgangswelle 7 im Retarder. Zur Lagerung sind ein erstes Lager 21a im Statorgehäuse 8 und ein zweites Lager 21b im Rotorgehäuse 9 angeordnet. Der Rotor 20 ist zwischen den Lagern 21a und b angeordnet, wobei die Innenringe der Lager 21a und b und der Rotor 20 mittels einer Spannschraube 29 gegeneinander verspannt sind.

Zur Abdichtung des Getriebes gegenüber der Umgebung ist ein Wellendichtring 30 vorgesehen. Durch diesen Aufbau wird ersichtlich, dass der Retarder 3, umfassend die beiden Gehäuseteile 8, 9, den Getriebeausgangsdeckel bildet, da erst mit dem Wellendichtring eine Abdichtung gegenüber der Umgebung erfolgt. Leckölströme vom Retarder und Schmierölströmen durch die Lager werden in den Ölsumpf, der in Getriebegehäuse 2 angeordnet ist, abgeleitet. Auch die Entlüftung des Retarders erfolgt innerhalb des Getriebegehäuses, so dass kein Öl vom Retarder aus in die Umwelt gelangt.

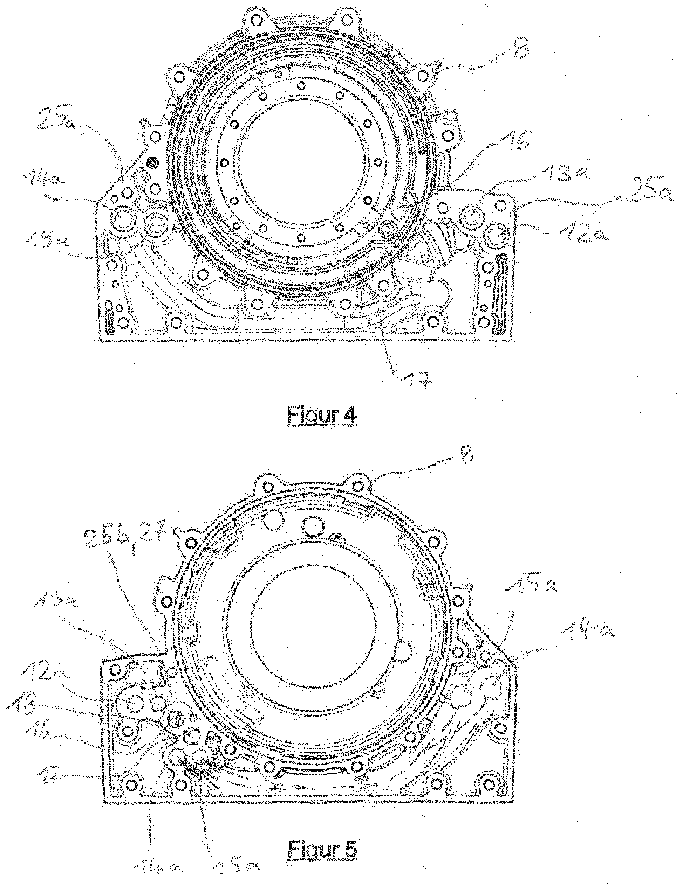

Die Figuren 4 und 5 zeigen das Statorgehäuse 8 von beiden Seiten also mit Blick auf die beiden Verbindungsebenen 25a und b. Einmal sind in Figur 4 die Leitungsenden zum Anschluss der Wärmetauscherkonsole 24a, b und in Figur 5 die Leitungsenden zum Anschluss des Ventilblocks zu sehen, wobei der Ventilblock auch hier nicht näher dargestellt ist.

In der Verbindungsebene 25a enden auf der rechten Seite die Zuführleitungen 12a und 13a, die über die Leitungen 12b und 13b in der Konsole 24a mit dem Wärmetauscher verbunden sind, und auf der linken Seite die Rückführleitungen 14a und 15a durch die das gekühlte Öl aus dem Wärmetauscher 11, über die Rückführleitungen 14b und 15b in der Konsole 24b, aus dem Wärmetausch er zurückgeführt wird.

Der Blick auf die Verbindungsebene 25b zeigt, dass alle Leitungsanschlüsse 12a bis d und die Kanalanschlüsse 16 bis 18 in einem Bereich positioniert sind, dem Anschlussbereich 27 für den Ventilblock. Die Leitungen 14a und 15a werden in dem Statorgehäuse von der einen Seite auf die andere geführt, hier auch durch die Pfeile verdeutlicht.

Der Anschluss bzw. die Koppelung des Ventilblocks an das Statorgehäuse 8 und der genaue Anschlussbereich 27 für den Ventilblock ist hier nur beispielhaft dargestellt.

### Bezugszeichenliste

- 1: Automatgetriebe
- 2: Getriebegehäuse
- 3: Retarder
- 4: Motorflanschanschlussdeckel
- 5: Wandler
- 6: Eingangswelle
- 7: Ausgangswelle
- 8: Statorgehäuse
- 9: Rotorgehäuse
- 10: Wärmetauscherkonsole
- 11: Wärmetauscher
- 12a, b: Zuführleitung WT Retarder
- 13a, b: Zuführleitung WT Sumpf
- 14a, b: Rückführleitung WT Retarder
- 15a, b: Rückführleitung WT Sumpf
- 16: Ölzuführkanal
- 17: Ölabführkanal
- 18: Kanal
- 19: Stator
- 20: Rotor
- 21a, b: Lager
- 22: Dichtung
- 23: Ventilblock
- 24a, b: Konsole
- 25a, b: Verbindungsebene
- 26: Retarderarbeitsraum
- 27: Ventilblockkoppelbereich
- 28a, b: Kühlwasseranschlüsse
- 29: Spannschraube
- 30: Dichtung

## Patentansprüche

1. Automatgetriebe (1) mit Retarder (3) zum Einsatz in einem Kraftfahrzeugantriebsstrang, umfassend ein Getriebegehäuse (1) mit einem Motorflanschanschlussdeckel (4) und einem Getriebeausgangsdeckel (8, 9) und eine Wärmetauscherkonsole (10), die an der Getriebeausgangsseite (A) angeordnet ist, wobei Verbindungsleitungen (12a, b; 13a, b; 14a, b; 15a, b) vorgesehen sind, mittels denen ein Wärmetauscher (11), der an der Wärmetauscherkonsole (10) angeordnet ist, mit dem Automatgetriebe (1) verbunden ist,
**dadurch gekennzeichnet,**
**dass** der Retarder (3) ein Startorgehäuseteil (8) und ein Rotorgehäuseteil (9) umfasst, die den Getriebeausgangsdeckel bilden, wobei die Verbindungsleitungen (12a, 13a, 14a, 15a) im Statorgehäuse (8) integriert sind.

2. Automatgetriebe (1) nach Anspruch 1
**dadurch gekennzeichnet,**
**dass** das Statorgehäuse (8) eine erste und eine zweite Verbindungebene (25a, b) aufweist, wobei die Ausgänge der Verbindungsleitungen (12a, 13a, 14a, 15a) in den Verbindungebenen (25a, b) enden.

3. Automatgetriebe (1) nach Anspruch 1
**dadurch gekennzeichnet,**
**dass** die Wärmetauscherkonsole (10) eine Konsole (24a, b) umfasst, die mit dem Statorgehäuse (8) in der ersten Verbindungsebene (25a) gekoppelt ist.

4. Automatgetriebe (1) nach Anspruch 1,
**dadurch gekennzeichnet,**
**dass** die Verbindungsleitungen (12b, 13b, 14b, 15b) in der Konsole (24a, b) integriert sind.

5. Automatgetriebe (1) nach Anspruch 1,
**dadurch gekennzeichnet,**
**dass** die Konsole (24a, b) zweiteilig ausgeführt ist, wobei die Verbindungsleitungen (12b, 13b), die Zuführleitung, in der ersten Konsole (24a) und die Verbindungsleitungen (14b, 15b), die Rückführleitung, in der zweiten Konsole (24b) integriert sind.

6. Automatgetriebe (1) nach Anspruch 1,
**dadurch gekennzeichnet,**
**dass** im Getriebegehäuse (2) ein Ventilblock (23) vorgesehen ist, wobei der Ventilblock mit dem Wärmetauscher (11) über die Verbindungsleitungen (12a, b; 13a, b; 14a, b; 15a, b) verbunden ist.

7. Automatgetriebe (1) nach Anspruch 6,
**dadurch gekennzeichnet,**
**dass** der Ventilblock (23) direkt mit dem Startorgehäuseteil (8) in der Verbindungsebene (25b) gekoppelt ist, wobei die Verbindungsleitungen (12a, 13a, 14a, 15a) komplementär zu den Ventilblockanschlüssen angeordnet sind.

8. Automatgetriebe (1) nach Anspruch 1,
**dadurch gekennzeichnet,**
**dass** im Rotorgehäuseteil (8) Kanäle (16, 17, 18) vorgesehen sind, die mit dem Retarderarbeitsraum (26), der von Rotor und Stator gebildet wird, verbunden sind.

9. Automatgetriebe (1) nach Anspruch 2 und 8,
**dadurch gekennzeichnet,**
**dass** die Kanäle (16, 17, 18) in der zweiten Verbindungsebene (25b) über komplementäre Anschlüsse mit dem Ventilblock (23) gekoppelt sind, so dass der Retarderarbeitsraum (26) mit Öl befüllbar und entleerbar ist.

10. Automatgetriebe (1) nach Anspruch 2,
**dadurch gekennzeichnet,**
**dass** die zweite Verbindungsebene (25b) einen Ventilblockkoppelbereich (27) aufweist in dem die Verbindungsleitungen (12a, 13a, 14a, 15a) und die Kanäle (16, 17, 18) mit dem Ventilblock verbindbar sind.

11. Automatgetriebe (1) nach Anspruch 1,
**dadurch gekennzeichnet,**
**dass** eine Ausgangswelle (7) im Retarder (3) gelagert ist, wobei ein erstes Lager (21a) im Statorgehäuse (8) und ein zweites Lager (21b) im Rotorgehäuse (9)angeordnet ist.

12. Automatgetriebe (1) nach Anspruch 11,
**dadurch gekennzeichnet,**
**dass** ein Rotor (20) des Retarders (3) zwischen dem zweiten Lager (21b) und dem ersten Lager (21a) im Statorgehäuse (8) angeordnet ist, wobei die Innenringe der Lager (21a, b) und der Rotor (20) mittels einer Spannschraube (29) gegeneinander verspannt sind.

## Claims

1. Automatic transmission (1) having a retarder (3) for use in a motor vehicle drive powertrain, comprising a transmission housing (1), having an engine flange connection plate (4) and a transmission output plate (8, 9), and a heat exchanger console (10) which is disposed on the transmission output side (A), wherein connecting lines (12a, b; 13a, b; 14a, b; 15a, b) by means of which a heat exchanger (11) that is disposed on the heat exchanger console (10) is connected to the automatic transmission (1) are provided,
**characterized in that** the retarder (3) comprises a stator housing part (8) and a rotor housing part (9) which form the transmission output plate, wherein the connecting lines (12a, 13a, 14a, 15a) are integrated in the stator housing (8).

2. Automatic transmission (1) according to Claim 1, **characterized in that** the stator housing (8) has a first and a second connection plane (25a, b), wherein the outputs of the connecting lines (12a, 13a, 14a, 15a) terminate in the connection planes (25a, b).

3. Automatic transmission (1) according to Claim 1, **characterized in that** the heat exchanger console (10) comprises a console (24a, b) which is coupled to the stator housing (8) in the first connection plane (25a).

4. Automatic transmission (1) according to Claim 1, **characterized in that** the connecting lines (12b, 13b, 14b, 15b) are integrated in the console (24a, b) .

5. Automatic transmission (1) according to Claim 1, **characterized in that** the console (24a, b) is embodied in two parts, wherein the connecting lines (12b, 13b), the supply lines, are integrated in the first console (24a), and the connecting lines (14b, 15b), the return lines, are integrated in the second console (24b).

6. Automatic transmission (1) according to Claim 1, **characterized in that** a valve block (23) is provided in the transmission housing (2), wherein the valve block by way of the connecting lines (12a, b; 13a, b; 14a, b; 15a, b) is connected to the heat exchanger (11) .

7. Automatic transmission (1) according to Claim 6, **characterized in that** the valve block (23) is coupled directly to the stator housing part (8) in the connection plane (25b), wherein the connecting lines (12a, 13a, 14a, 15a) are disposed so as to be complementary to the valve block connectors.

8. Automatic transmission (1) according to Claim 1, **characterized in that** ducts (16, 17, 18) which are connected to the retarder operating chamber (26) that is formed by the rotor and the stator are provided in the rotor housing part (8).

9. Automatic transmission (1) according to Claims 2 and 8, **characterized in that** the ducts (16, 17, 18) in the second connection plane (25b) are coupled to the valve block (23) by way of complementary connectors such that the retarder operating chamber (26) is able to be filled with oil and emptied from oil.

10. Automatic transmission (1) according to Claim 2, **characterized in that** the second connection plane (25b) has a valve block coupling region (27) in which the connecting lines (12a, 13a, 14a, 15a) and the ducts (16, 17, 18) are able to be connected to the valve block.

11. Automatic transmission (1) according to Claim 1, **characterized in that** an output shaft (7) is mounted in the retarder (3), wherein a first bearing (21a) is disposed in the stator housing (8) and a second bearing (21b) is disposed in the rotor housing (9).

12. Automatic transmission (1) according to Claim 11, **characterized in that** a rotor (20) of the retarder (3) is disposed between the second bearing (21b) and the first bearing (21a) in the stator housing (8), wherein the inner races of the bearings (21a, b) and the rotor (20) are mutually braced by means of a tensioning screw (29).

## Revendications

1. Transmission automatique (1) pourvue d'un ralentisseur (3), à utiliser dans une chaîne cinématique de véhicule automobile, comprenant un carter de transmission (1) pourvu d'un couvercle de raccordement de flasque moteur (4) et d'un couvercle de sortie de transmission (8, 9) et une console d'échangeur thermique (10) qui est disposée du côté sortie de transmission (A), dans laquelle des conduites de connexion (12a, b ; 13a, b ; 14a, b ; 15a, b) sont prévues au moyen desquelles un échangeur thermique (11), qui est disposé sur la console d'échangeur thermique (10), est connecté à la transmission automatique (1),
**caractérisée en ce que** le ralentisseur (3) comprend une partie de carter de stator (8) et une partie de carter de rotor (9) qui constituent le couvercle de sortie de transmission, dans laquelle les conduites de connexion (12a, 13a, 14a, 15a) sont intégrées dans le carter de stator (8).

2. Transmission automatique (1) selon la revendication 1, **caractérisée en ce que** le carter de stator (8) présente un premier et un deuxième plan de connexion (25a, b), dans laquelle les sorties des conduites de connexion (12a, 13a, 14a, 15a) se terminent dans les plans de connexion (25a, b).

3. Transmission automatique (1) selon la revendication 1, **caractérisée en ce que** la console d'échangeur thermique (10) comprend une console (24a, b) qui est couplée au carter de stator (8) dans le premier plan de connexion (25a).

4. Transmission automatique (1) selon la revendication 1, **caractérisée en ce que** les conduites de connexion (12b, 13b, 14b, 15b) sont intégrées dans la console (24a, b).

5. Transmission automatique (1) selon la revendication 1, **caractérisée en ce que** la console (24a, b) est réalisée en deux parties, dans laquelle les conduites de connexion (12b, 13b), la conduite d'amenée, sont intégrées dans la première console (24a) et les conduites de connexion (14b, 15b), la conduite de récupération, sont intégrées dans la deuxième console (24b).

6. Transmission automatique (1) selon la revendication 1, **caractérisée en ce qu'**un bloc de soupapes (23) est prévu dans le carter de transmission (2), dans laquelle le bloc de soupapes est connecté à l'échangeur thermique (11) par l'intermédiaire des conduites de connexion (12a, b ; 13a, b ; 14a, b ; 15a, b) .

7. Transmission automatique (1) selon la revendication 6, **caractérisée en ce que** le bloc de soupapes (23) est couplé directement à la partie de carter de stator (8) dans le plan de connexion (25b), dans laquelle les conduites de connexion (12a, 13a, 14a, 15a) sont disposées de manière complémentaire aux raccords de bloc de soupapes.

8. Transmission automatique (1) selon la revendication 1, **caractérisée en ce que** dans la partie de carter de rotor (8), des canaux (16, 17, 18) sont prévus qui sont connectés à l'espace de travail de ralentisseur (26) qui est formé par le rotor et le stator.

9. Transmission automatique (1) selon la revendication 2 et 8, **caractérisée en ce que** les canaux (16, 17, 18) dans le deuxième plan de connexion (25b) sont couplés au bloc de soupapes (23) par des raccords complémentaires de sorte qu'il est possible de remplir d'huile l'espace de travail de ralentisseur (26) et de vidanger l'huile.

10. Transmission automatique (1) selon la revendication 2, **caractérisée en ce que** le deuxième plan de connexion (25b) présente une zone de couplage de bloc de soupapes (27) dans laquelle les conduites de connexion (12a, 13a, 14a, 15a) et les canaux (16, 17, 18) peuvent être connectés au bloc de soupapes.

11. Transmission automatique (1) selon la revendication 1, **caractérisée en ce qu'**un arbre de sortie (7) est monté dans le ralentisseur (3), dans laquelle un premier palier (21a) est disposé dans le carter de stator (8) et un deuxième palier (21b) est disposé dans le carter de rotor (9).

12. Transmission automatique (1) selon la revendication 11, **caractérisée en ce qu'**un rotor (20) du ralentisseur (3) est disposé entre le deuxième palier (21b) et le premier palier (21a) dans le carter de stator (8), dans laquelle les bagues intérieures des paliers (21a, b) et le rotor (20) sont serrés les uns contre les autres au moyen d'une vis de serrage (29).
